(19) **Europäisches Patentamt**

**European Patent Office**

**Office européen des brevets**

(11) **EP 1 498 639 A1**

(12) **EUROPEAN PATENT APPLICATION**

(43) Date of publication:
**19.01.2005 Bulletin 2005/03**

(51) Int Cl.7: **F16H 9/18**, F16H 55/56,
F16H 61/00

(21) Application number: **04014751.4**

(22) Date of filing: **23.06.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **14.07.2003 JP 2003196240**

(71) Applicant: **JATCO Ltd
Fuji-shi, Shizuoka 417-8585 (JP)**

(72) Inventors:
• **Katou, Yoshiaki
Fuji-shi Shizuoka 417-8585 (JP)**
• **Kono, Yoshihiro
Fuji-shi Shizuoka 417-8585 (JP)**

(74) Representative: **Grünecker, Kinkeldey,
Stockmair & Schwanhäusser Anwaltssozietät
Maximilianstrasse 58
80538 München (DE)**

(54) **Belt continuously-variable transmission**

(57)     A centrifugal hydraulic pressure cancel chamber is provided between a fixed wall and a piston. The fixed wall is formed adjacent to a piston chamber. The piston chamber exerts a centrifugal hydraulic pressure to move a movable pulley portion. The piston directly presses the movable pulley portion with the centrifugal hydraulic pressure exerted from the piston chamber. The centrifugal hydraulic pressure cancel chamber exerts a centrifugal hydraulic pressure with a supplied centrifugal hydraulic pressure cancel fluid to cancel the centrifugal hydraulic pressure exerted from the piston chamber. A supply passage is provided in a shaft supporting the movable pulley portion, and supplies the centrifugal hydraulic pressure cancel fluid to the centrifugal hydraulic pressure cancel chamber. The centrifugal hydraulic pressure cancel fluid flows between the centrifugal hydraulic pressure cancel chamber and the supply passage liquid-tightly.

**FIG.2**

**Description**

## BACKGROUND OF THE INVENTION

The present invention generally relates to a hydraulic system for a belt continuously-variable transmission, and more particularly, to a hydraulic system for controlling a clamp pressure and a transmission shift pressure independently.

Japanese Patent Application Publication No. 2001-182791 (FIG. 2) discloses an example of a hydraulic system for automatic transmission, in which a centrifugal hydraulic pressure cancel chamber is provided at a backside of a fixed wall of a driven pulley. This chamber is capable of canceling a centrifugal hydraulic pressure occurring in the driven pulley, even when a rotation speed of the driven pulley becomes high as in an overdrive state. The hydraulic system thereby achieves a relatively stable transmission shift control.

## SUMMARY OF THE INVENTION

It is an object of the present invention to provide a belt continuously-variable transmission capable of effectively canceling a centrifugal hydraulic pressure occurring in a pulley and enhancing an efficient use of fluid.

According to one aspect of the present invention, a belt continuously-variable transmission including: a first fixed wall disposed adjacent to a piston chamber exerting a centrifugal hydraulic pressure to move a movable pulley portion; a piston arranged to press the movable pulley portion, and disposed opposite the first fixed wall across a centrifugal hydraulic pressure cancel chamber; a pulley including the movable pulley portion and a fixed pulley portion fixedly disposed opposite the movable pulley portion so as to form a pulley groove between the movable pulley portion and the fixed pulley portion, the movable pulley portion being movable to change a width of the pulley groove; and a shaft supporting the pulley, and formed with a supply passage connected liquid-tightly with the centrifugal hydraulic pressure cancel chamber, the supply passage supplying a centrifugal hydraulic pressure cancel fluid to the centrifugal hydraulic pressure cancel chamber.

The other objects and features of this invention will become understood from the following description with reference to the accompanying drawings.

## BRIEF DESCRIPTION OF THE DRAWINGS

FIG. 1 is a sectional view showing a belt continuously-variable transmission (CVT) according to an embodiment of the present invention.

FIG. 2 is a magnified sectional view showing the belt CVT of FIG. 1.

FIG. 3 is a front view showing a transmission cover of the belt CVT of FIG. 1.

FIG. 4 is a circuit diagram of a hydraulic circuit of the belt CVT of FIG. 1.

FIG. 5 is a magnified sectional view showing a secondary pulley of the belt CVT of FIG. 1.

## DETAILED DESCRIPTION OF THE INVENTION

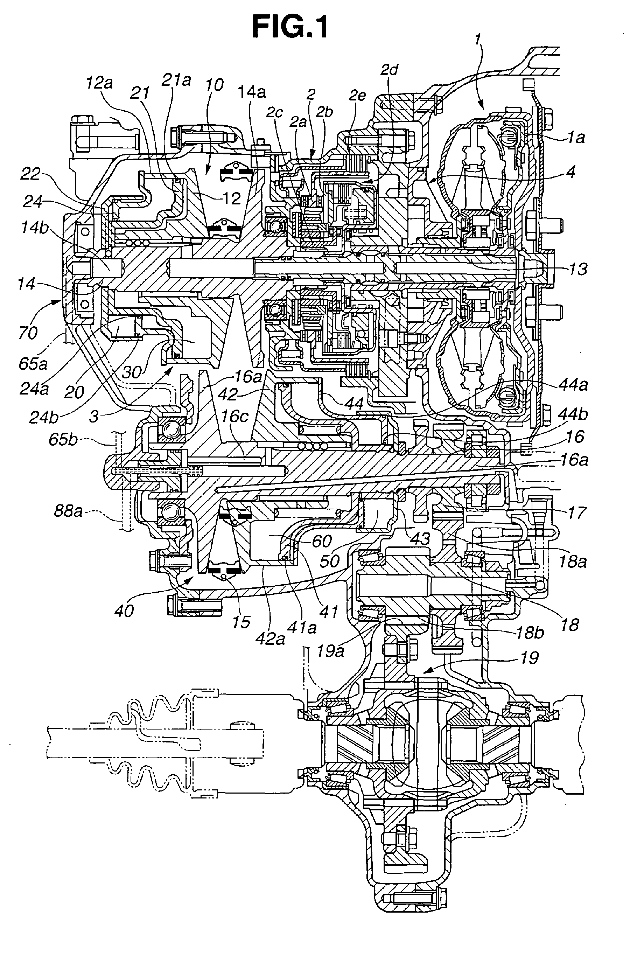

FIG. 1 is a sectional view showing a transmission or drive system for a vehicle. The transmission system of this example includes a torque converter 1 having a lockup clutch 1a, an oil pump 4, and a belt continuously-variable transmission (CVT) 3 according to an embodiment of the present invention.

The torque converter 1 is a torque transmission mechanism coupled with an output shaft of an engine of the vehicle, and includes the lockup clutch 1a directly engaging the engine with the CVT 3. The torque converter 1 further includes an output shaft 13 coupled with a ring gear 2a of a forward/reverse selector mechanism 2. The forward/reverse selector mechanism 2 is formed as a planetary gear mechanism including the ring gear 2a, a pinion carrier 2b and a sun gear 2c. The sun gear 2c is coupled with a transmission input shaft 14. A reverse brake 2e fixes the pinion carrier 2b to a transmission casing, and a forward clutch 2d engages the transmission input shaft 14 unitarily with the pinion carrier 2b.

The CVT 3 is a transmission shift mechanism provided on the transmission input shaft 14 and a driven shaft 16. The CVT 3 includes a primary pulley 10, a secondary pulley 40, and a belt 15 transmitting torque of the primary pulley 10 to the secondary pulley 40. The primary pulley 10 is provided on the transmission input shaft 14. The primary pulley 10 includes a fixed pulley portion or disk 14a and a movable pulley portion or disk 12. The fixed pulley portion 14a rotates unitarily with the transmission input shaft 14. The movable pulley portion 12 is disposed opposite the fixed pulley portion 14a so as to form a V-shaped pulley groove therebetween. The movable pulley portion 12 is movable in an axial direction of the transmission input shaft 14 by hydraulic pressures acting in a primary pulley cylinder chamber 30 and a primary clamp chamber 20.

The secondary pulley 40 is provided on the driven shaft 16. The secondary pulley 40 includes a fixed pulley portion or disk 16a and a movable pulley portion or disk 42. The fixed pulley portion 16a rotates unitarily with the driven shaft 16. The movable pulley portion 42 is disposed opposite the fixed pulley portion 16a so as to form a V-shaped pulley groove therebetween. The movable pulley portion 42 is movable in an axial direction of the driven shaft 16 by hydraulic pressures acting in a secondary pulley cylinder chamber 60 and a secondary clamp chamber 50.

A drive gear 17 is fixedly mounted on the driven shaft 16. The drive gear 17 transmits torque of the driven shaft 16 through an idler gear 18a and a pinion gear 18b both provided on an idler shaft 18, a final gear 19a, and a differential assembly 19 to a drive shaft, and thereby drives the drive shaft coupled with drive wheels.

In the course of transmitting the torque, the widths of the V-shaped pulley grooves are changeable by moving the movable pulley portion 12 of the primary pulley 10 and the movable pulley portion 42 of the secondary pulley 40 in the axial directions so as to change the radii of contact positions at which each of the primary pulley 10 and the secondary pulley 40 contacts the belt 15. In accordance with the changes of the radii of the contact positions, the CVT 3 is capable of varying a rotation ratio between the primary pulley 10 and the secondary pulley 40 to change a transmission ratio of the torque. The control of changing the widths of the V-shaped pulley grooves is performed by regulating the hydraulic pressures acting in the primary pulley cylinder chamber 30, the secondary pulley cylinder chamber 60, the primary clamp chamber 20, and the secondary clamp chamber 50.

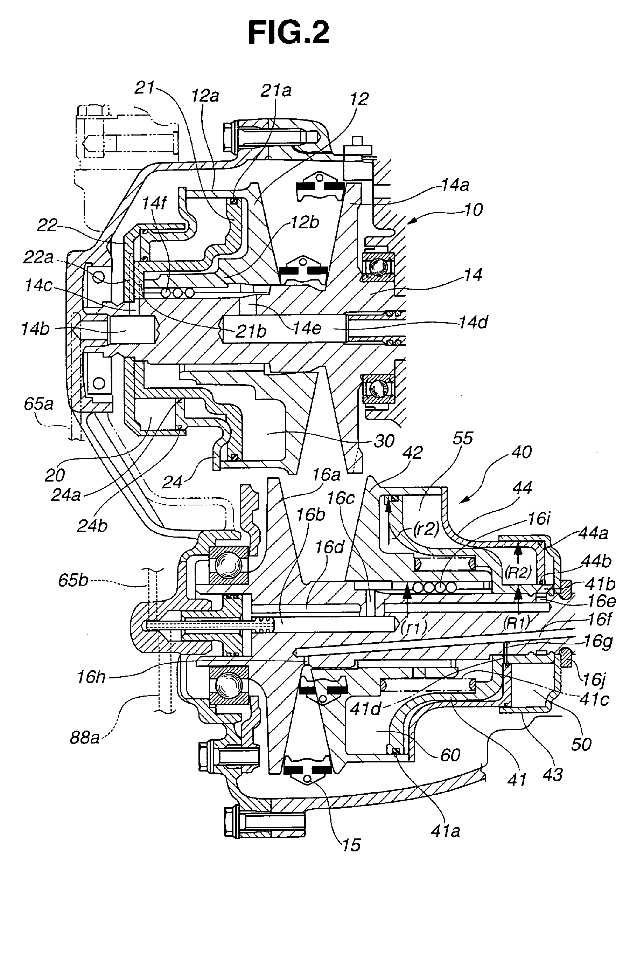

Here, a description will be given, with reference to FIG. 2, of piston chambers, including the cylinder chambers and the clamp chambers, of the primary pulley 10 and the secondary pulley 40. FIG. 2 is a magnified sectional view showing the primary pulley 10 and the secondary pulley 40.

The primary pulley cylinder chamber 30 is a chamber compartmented by the movable pulley portion 12, an extension portion 12a of the movable pulley portion 12, and a fixed wall 21. The movable pulley portion 12 rotates unitarily with the transmission input shaft 14 with ball splines 14f therebetween. An outer end periphery of the fixed wall 21 abuts on an inner side periphery of the extension portion 12a, and is sealed with a seal 21a. Therefore, even when the movable pulley portion 12 is moved in the axial direction of the transmission input shaft 14, the primary pulley cylinder chamber 30 is maintained liquid-tight.

The primary clamp chamber 20 is a chamber compartmented by the fixed wall 21, a fixed wall 22, and a piston 24. A radially extending outer portion of the piston 24, the portion extending in a radial direction of the transmission input shaft 14, abuts on a left end of the extension portion 12a of the movable pulley portion 12. Each of inner ends of the fixed wall 21 and the fixed wall 22 is pressed into the transmission input shaft 14, and is fixed therewith liquid-tightly. An inside portion of the piston 24 seals the primary clamp chamber 20 liquid-tightly with seals 24a and 24b. A half hole 22a is formed in the fixed wall 22 with an opening elongated in the radial direction and opened in a direction toward the primary pulley cylinder chamber 30 (right in FIG. 2). A half hole 21b is formed in the fixed wall 21 with an opening elongated in the radial direction and opened in the opposite direction facing the opening of the half hole 22a (left in FIG. 2). The half hole 22a and the half hole 21b form a radial hydraulic passage for supplying a clamp pressure.

The radial hydraulic passage formed by the half holes 21b and 22a is supplied with a clamp pressure from a hydraulic passage 65a formed in a transmission cover 70 disposed at a left end of the transmission input shaft 14, via an axial passage 14b and a radial passage 14c. The axial passage 14b extends in the axial direction of the transmission input shaft 14. The radial passage 14c extends in the radial direction of the transmission input shaft 14. As mentioned above, the radial hydraulic passage is formed between the adjacent, pressed-in fixed walls 21 and 22, and therefore has an improved liquid-tightness.

The secondary pulley cylinder chamber or first piston chamber 60 is a chamber compartmented by the movable pulley portion 42, an extension portion 42a of the movable pulley portion 42, and a fixed wall 41. The movable pulley portion 42 rotates unitarily with the driven shaft 16 with ball splines 16i therebetween. An outer end periphery of the fixed wall 41 abuts on an inner side periphery of the extension portion 42a, and is sealed with a seal 41a. Therefore, even when the movable pulley portion 42 is moved in the axial direction of the driven shaft 16, the secondary pulley cylinder chamber 60 is maintained liquid-tight. The secondary pulley cylinder chamber 60 is supplied with a hydraulic pressure for transmission shift from a hydraulic passage 88a formed in the transmission cover 70, via an axial passage 16b and a radial passage 16c. The axial passage 16b extends in the axial direction of the driven shaft 16. The radial passage 16c extends in a radial direction of the driven shaft 16.

The secondary clamp chamber or second piston chamber 50 is a chamber compartmented by the fixed wall 41, a fixed wall or end wall 43, and a piston 44. A radially extending outer portion of the piston 44, the portion extending in the radial direction of the driven shaft 16, abuts on a right end of the extension portion 42a of the movable pulley portion 42. An inside portion of the piston 44 seals the secondary clamp chamber 50 liquid-tightly with seals 44a and 44b. A right end surface of the innermost portion of the fixed wall 41 abuts on a left side surface of the inner end portion of the fixed wall 43. A ring 16j is provided on the driven shaft 16, and is disposed adjacent to a right side surface of the inner end portion of the fixed wall 43 so that the fixed wall 41 and the fixed wall 43 are prohibited from moving rightward in the axial direction of the driven shaft 16 beyond the ring 16j.

The inner end portion of the fixed wall 43 is pressed into the driven shaft 16, and is fixed therein. A hydraulic passage 41b is formed substantially radially in the fixed wall 41 in the vicinity of the left side surface of the inner end portion of the fixed wall 43. The hydraulic passage 41b connects a radial passage 16e liquid-tightly with the secondary clamp chamber 50. The radial passage 16e extends in the radial direction of the driven shaft 16. As mentioned above, the hydraulic passage 41b is formed in the vicinity of the pressed-in fixed wall 43, and therefore has an improved liquid-tightness. The secondary clamp chamber 50 is supplied with a clamp pressure from a hydraulic passage 65b formed in the transmission cover 70, via an axial passage 16d, the radial passage 16e and the hydraulic passage 41b. The axial passage 16d extends in the axial direction of the driven shaft 16.

The secondary pulley 40 further includes a spring 41c disposed between the movable pulley portion 42 and the fixed wall 41 within the secondary pulley cylinder chamber 60. The spring 41c presses the movable pulley portion 42 to clamp the belt 15, in an initial state where the hydraulic pressure is not supplied yet. The spring 41c thus prevents slippage of the belt 15, when the vehicle is being towed, for example.

The secondary pulley 40 further includes a centrifugal hydraulic pressure cancel chamber 55 between the secondary pulley cylinder chamber 60 and the secondary clamp chamber 50. The centrifugal hydraulic pressure cancel chamber 55 is compartmented by the extension portion 42a of the movable pulley portion 42, the fixed wall 41 and the piston 44,. The centrifugal hydraulic pressure cancel chamber 55 is supplied with a lubricant fluid from an axial passage 16f via a radial passage 16g formed in the driven shaft 16, and via a hydraulic passage 41d formed in the fixed wall 41. The axial passage 16f, which is a supply passage, is formed at a position offset from, or not exactly parallel to, the axis of the driven shaft 16 in this example; however, the axial passage 16f may be formed along the axis of the driven shaft 16. The radial passage 16g, which is a connection passage, extends in the radial direction of the driven shaft 16.

The centrifugal hydraulic pressure cancel chamber 55, and the axial passage 16f connected therewith, extend to the vicinity of the fixed pulley portion 16a provided on the driven shaft 16, and are exposed to the open air from a radial passage 16h, which is an exposure passage. The radial passage 16h is formed radially in the driven shaft 16, and connects the axial passage 16f with the V-shaped pulley groove formed between the movable pulley portion 42 and the fixed pulley portion 16a. The centrifugal hydraulic pressure cancel chamber 55 and the axial passage 16f supplies the lubricant fluid to the belt 15 via the radial passage 16h. The centrifugal hydraulic pressure cancel chamber 55 and the axial passage 16f are liquid-tightly connected with each other via the radial passage 16g and the hydraulic passage 41d so that a centrifugal hydraulic pressure cancel fluid flows between the centrifugal hydraulic pressure cancel chamber 55 and the axial passage 16f. Therefore, as described hereinbelow, the centrifugal hydraulic pressure cancel chamber 55 can have an effective pressure surface area with an inside radius defined at a radial position close to the axial passage 16f, and thereby perform a sure cancellation of centrifugal hydraulic pressures.

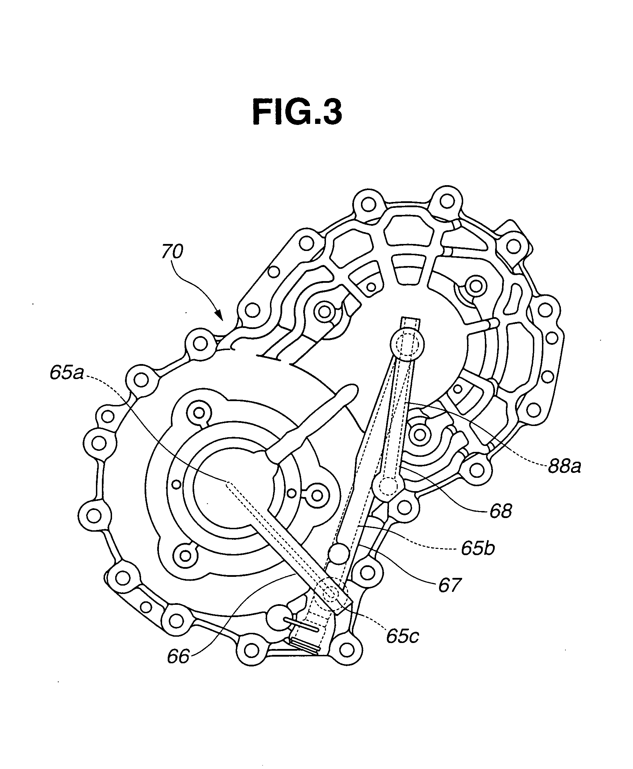

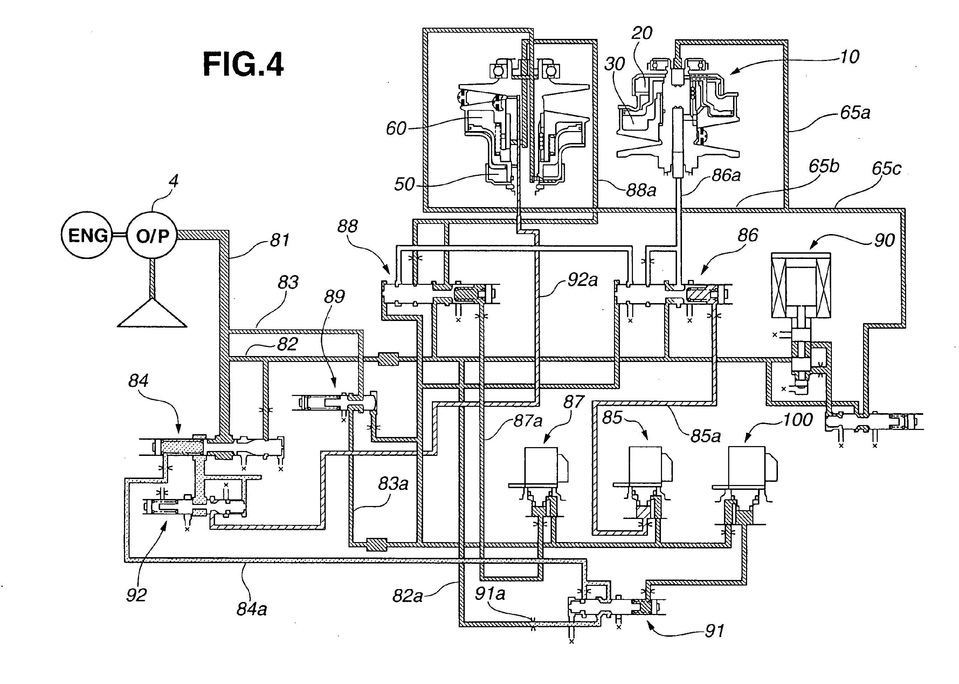

The primary clamp chamber 20 and the secondary clamp chamber 50 have equal pressure surface areas (as illustrated in the sectional view of FIG. 2), and are connected via the hydraulic passage 65a, the hydraulic passage 65b and an axial-direction hydraulic passage 65c formed in the transmission cover 70. FIG. 3 is a front view showing the transmission cover 70. Ribs 66, 67 and 68 are formed at an outer periphery of the transmission cover 70. The hydraulic passages 65a and 65b are formed inside the ribs 66 and 67, respectively. The axial-direction hydraulic passage 65c in this example extends from a control valve unit, which is described hereinbelow with FIG. 4, to an inside peripheral joint of the ribs 66 and 67 in an axial direction substantially perpendicular to the hydraulic passages 65a and 65b. The axial-direction hydraulic passage 65c supplies the clamp pressure from the control valve unit. The hydraulic passage 65a connects the axial-direction hydraulic passage 65c to the primary clamp chamber 20. The hydraulic passage 65b connects the axial-direction hydraulic passage 65c to the secondary clamp chamber 50. The hydraulic passage 88a are formed inside the rib 68. The hydraulic passage 88a supplies the transmission shift hydraulic pressure from the control valve unit for the secondary pulley 40.

FIG. 4 is a circuit diagram of a hydraulic circuit of the belt CVT 3 according to this embodiment.

As shown in FIG. 4, a pressure regulator valve 84 is supplied with a discharge pressure from the oil pump 4 via a hydraulic passage 81, and regulates the discharge pressure as a line pressure. The hydraulic passage 81 is connected with hydraulic passages 82 and 83. The hydraulic passage 82 is connected to a primary pulley control valve (PP/C.V) 86 and a secondary pulley control valve (SP/C.V) 88. The hydraulic passage 83 is connected to a pilot valve 89. The pilot valve 89 supplies a pilot hydraulic pressure to a line pressure solenoid 100. The line pressure solenoid 100 uses the pilot hydraulic pressure as an original hydraulic pressure for supplying a signal pressure to a pressure modifier valve 91.

The hydraulic passage 82 supplies the line pressure to the pressure modifier valve 91 via a hydraulic passage 82a connected with an orifice 91a. The pressure modifier valve 91 regulates the line pressure by the signal pressure, and supplies the resulting hydraulic pressure to the pressure regulator valve 84 via a hydraulic passage 84a. The resulting hydraulic pressure functions as a back pressure for the pressure regulator valve 84. The pressure regulator valve 84 regulates the discharge pressure as the line pressure by using the back pressure.

The hydraulic pressure regulated by the pilot valve 89 is supplied to a primary transmission shift control valve 85 and a secondary transmission shift control valve 87 via a hydraulic passage 83a. The transmission shift control valve 85 regulates the hydraulic pressure, and supplies the resulting hydraulic pressure as a back pressure to the PP/C.V 86 via a hydraulic passage 85a. The transmission shift control valve 87 regulates the hydraulic pressure, and supplies the resulting hydraulic pressure as a back pressure to the SP/C.V 88 via a hydraulic passage 87a. The PP/C.V 86 regulates the line pressure supplied from the pressure regulator valve 84, and supplies a transmission shift hydraulic pressure to the primary pulley cylinder chamber 30 via a hydraulic passage 86a. The SP/C.V 88 regulates the line pressure supplied from the pressure regulator valve 84, and supplies a transmission shift hydraulic pressure to the secondary pulley cylinder chamber 60 via the hydraulic passage 88a.

The hydraulic passage 82 is connected to the hydraulic passage 65c via a pressure reducing valve 90. The hydraulic passage 65c is connected with the hydraulic passage 65a and the hydraulic passage 65b. The hydraulic passage 65a is connected to the primary clamp chamber 20. The hydraulic passage 65b is connected to the secondary clamp chamber 50. The pressure reducing valve 90 is electronically controlled to reduce the line pressure in accordance with a command signal from a CVT control unit, and supplies the reduced pressure as the clamp pressure via the hydraulic passages 65c, 65a and 65b to the primary pulley 10 and the secondary pulley 40.

A hydraulic pressure drained from the pressure regulator valve 84 is regulated by a pulley lubricating valve 92. A hydraulic pressure drained from the pulley lubricating valve 92 is supplied as a lubricant fluid to the axial passage 16f via a hydraulic passage 92a.

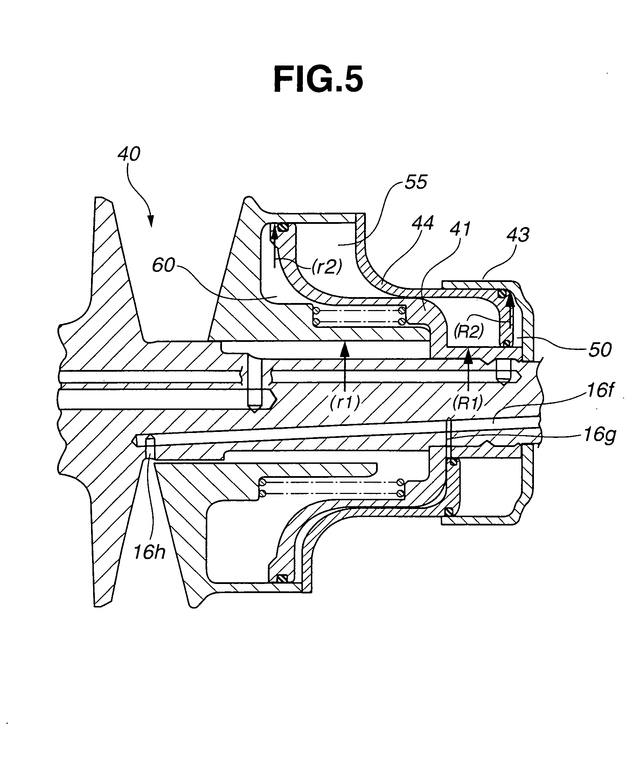

Next, a description will be given, with reference to FIG. 5, of a mechanism how the centrifugal hydraulic pressure cancel chamber 55 cancels centrifugal hydraulic pressures. FIG. 5 is a magnified sectional view showing the secondary pulley 40. Centrifugal hydraulic pressures Fs and Fc of the secondary pulley cylinder chamber 60 and the secondary clamp chamber 50, respectively, are represented by the following expressions.

$$Fs = \rho\omega^2(r_2{}^2 - r_1{}^2)$$

$$Fc = \rho\omega^2(R_2{}^2 - R_1{}^2)$$

In these expressions, p indicates a fluid density, $\omega$ indicates a rotation speed of the driven shaft 16; $r_2$ indicates an outside radius of an effective pressure surface area of the secondary pulley cylinder chamber 60; $r_1$ indicates an inside radius of the effective pressure surface area of the secondary pulley cylinder chamber 60; $R_2$ indicates an outside radius of an effective pressure surface area of the secondary clamp chamber 50; and $R_1$ indicates an inside radius of the effective pressure surface area of the secondary clamp chamber 50. The centrifugal hydraulic pressure Fs of the secondary pulley cylinder chamber 60 acts on the movable pulley portion 42 in a direction (left in FIG. 5) which decreases the width of the V-shaped pulley groove, since the wall 41 is a fixed wall. The centrifugal hydraulic pressure Fc of the secondary clamp chamber 50 acts on the piston 44 to press the movable pulley portion 42 in substantially the same direction (left in FIG. 5) which decreases the width of the V-shaped pulley groove, since the wall 43 is a fixed wall.

The centrifugal hydraulic pressure cancel chamber 55 has an effective pressure surface area with an outside radius substantially equal to $r_2$ which corresponds to the outside radius of the effective pressure surface area of the secondary pulley cylinder chamber 60, as shown in FIG. 5. As described above, the centrifugal hydraulic pressure cancel chamber 55 in this embodiment is exposed to the open air, via the axial passage 16f, at the radial passage 16h which is distanced from the centrifugal hydraulic pressure cancel chamber 55. Therefore, the effective pressure surface area of the centrifugal hydraulic pressure cancel chamber 55 has an inside radius of R defined at a radial position close to the axial passage 16f. In this embodiment, since the axial passage 16f is formed substantially along the axis of the driven shaft 16, R is smaller than or equal to $R_1$ which indicates the inside radius of the effective pressure surface area of the secondary clamp chamber 50. Hence, the centrifugal hydraulic pressure cancel chamber 55 exerts a centrifugal hydraulic pressure Fe represented by the following expression.

$$Fe = \rho\omega^2(r_2{}^2 - R^2)$$

The centrifugal hydraulic pressure Fe of the centrifugal hydraulic pressure cancel chamber 55 acts on the piston 44 in a direction (right in FIG. 5) which increases the width of the V-shaped pulley groove, since the wall 41 is a fixed wall. The centrifugal hydraulic pressure Fe is capable of canceling the centrifugal hydraulic pressures of the secondary pulley cylinder chamber 60 and the secondary clamp chamber 50 at high levels, since each of the centrifugal hydraulic pressures of the secondary pulley cylinder chamber 60 and the secondary clamp chamber 50 acts in the opposite direction.

The centrifugal hydraulic pressure cancel fluid is supplied from the axial passage 16f via the radial passage 16g and the hydraulic passage 41d to the centrifugal hydraulic cancel chamber 55, and the fluid is also supplied as a lubricant fluid from the axial passage 16f via the radial passage 16h to the contact surfaces at which the belt 15 contacts the secondary pulley 40 at the V-shaped pulley groove. That is, the fluid supplied to the centrifugal hydraulic pressure cancel chamber 55 is exposed to the open air and used as a lubricant and a coolant at the V-shaped pulley groove. Thus, the CVT 3 of this embodiment can efficiently use the fluid exposed to the open air.

As described above, in the belt CVT 3 of this embodiment, the centrifugal hydraulic pressure cancel chamber 55 is provided between the secondary pulley cylinder chamber 60 and the secondary clamp chamber 50. Therefore, the centrifugal hydraulic pressures of the secondary pulley cylinder chamber 60 and the secondary clamp chamber 50 can be canceled by one chamber, i.e., the centrifugal hydraulic pressure cancel chamber 55. With this centrifugal hydraulic pressure cancel chamber 55, the CVT 3 of this embodiment can achieve a stable transmission shift control, even when the rotation speed of the driven shaft 16 becomes considerably high as in an overdrive state.

Besides, in this embodiment, the centrifugal hydraulic pressure cancel chamber 55 includes an inner chamber part which is adjacent to the inner portion of the fixed wall 41 and the inner portion of the clamping piston 44; and an outer chamber part which is adjacent to the extension portion 42a of the movable pulley portion 42, the radially extending outer portion of the fixed wall 41, and the radially extending outer portion of the clamping piston 44. That is, the centrifugal hydraulic pressure cancel chamber 55 not only includes the inner chamber part opposite the secondary clamp chamber 50, but also includes the outer chamber part opposite the secondary pulley cylinder chamber 60, as shown in FIGS. 3 and 5. Thus, the centrifugal hydraulic pressure cancel chamber 55 of this embodiment is capable of canceling the centrifugal hydraulic pressures of the secondary clamp chamber 50 and the secondary pulley cylinder chamber 60 at high levels.

Besides, the CVT 3 is also effective with a different arrangement of the secondary pulley cylinder chamber 60 and the secondary clamp chamber 50. Specifically, the secondary pulley cylinder chamber 60 and the secondary clamp chamber 50 may be disposed at different radial positions, which are positions offset or distanced in the radial direction of the driven shaft 16. In this arrangement, the inside radius ($r_1$) of the effective pressure surface area of the secondary pulley cylinder chamber 60 and the outside radius ($R_2$) of the effective pressure surface area of the secondary clamp chamber 50 are defined at closer positions in the radial direction. This arrangement at least increases a difference between the outside radius ($r_2$) of the effective pressure surface area of the centrifugal hydraulic pressure cancel chamber 55 and the inside radius ($R=<R_1$) thereof, and consequently, increases the centrifugal hydraulic pressure Fe of the centrifugal hydraulic pressure cancel chamber 55 which is represented by the foregoing expression. With this increased centrifugal hydraulic pressure Fe, the centrifugal hydraulic pressure cancel chamber 55 is capable of canceling the centrifugal hydraulic pressures of the secondary pulley cylinder chamber 60 and the secondary clamp chamber 50 more effectively.

If a hydraulic passage or port supplying the fluid to the centrifugal hydraulic pressure cancel chamber, and a hydraulic passage or port exposing the centrifugal hydraulic pressure cancel chamber to the open air are disposed at adjacent positions in a transmission mechanism, then the centrifugal hydraulic pressure cancel chamber has an effective pressure surface area with an inside radius defined at a position corresponding to the exposing port. In accordance with the position of the exposing port, the inside radius of the effective pressure surface area of the centrifugal hydraulic pressure cancel chamber may become larger than the inside radius ($R_1$) of the effective pressure surface area of the secondary clamp chamber 50. In this case, the centrifugal hydraulic pressure cancel chamber cannot sufficiently cancel the centrifugal hydraulic pressure of at least the secondary clamp chamber 50. In addition, such transmission mechanism does not reuse the fluid exposed to the open air, but simply wastes the fluid, and thereby hinders an efficient use of fluid.

In this embodiment, by contrast, the radial passage 16g supplying the fluid to the centrifugal hydraulic pressure cancel chamber 55, and the radial passage 16h exposing the centrifugal hydraulic pressure cancel chamber 55 to the open air are disposed at positions offset, or distanced, at least in the axial direction of the driven shaft 16 so that the inside radius (R) of the effective pressure surface area of the centrifugal hydraulic pressure cancel chamber 55 is set at a radial position closer to the axis of the driven shaft 16. This smaller inside radius (R) increases the centrifugal hydraulic pressure Fe of the centrifugal hydraulic pressure cancel chamber 55 as represented by the foregoing expression. With the increased centrifugal hydraulic pressure Fe, the centrifugal hydraulic pressure cancel chamber 55 of this embodiment is capable of canceling the centrifugal hydraulic pressures acting in the chambers 60 and 50 further effectively.

Besides, the axial passage 16f supplying the fluid to the centrifugal hydraulic pressure cancel chamber 55 extends to connect to the radial passage 16h at the V-shaped pulley groove of the secondary pulley 40, and is exposed to the open air thereat. Therefore, the CVT 3 of this embodiment can use an extra portion of the fluid supplied to the centrifugal hydraulic pressure cancel chamber 55, as a lubricant and a coolant between the belt 15 and the movable pulley portion 42 at the V-shaped pulley groove. Thus, the CVT 3 of this embodiment does not waste the fluid exposed to the open air, but reuses the fluid as a lubricant and a coolant, and thereby enhances an efficient use of fluid.

Besides, the present invention is not only applicable to the belt CVT 3 of a double piston type as in this embodiment, but is also applicable to a belt CVT of a single piston type, for example. Such belt CVT is also effective in canceling a centrifugal hydraulic pressure.

Additionally, the present invention is effective, not only when the centrifugal hydraulic pressure cancel chamber 55 is provided in the secondary pulley 40 as in this embodiment, but also when the centrifugal hydraulic pressure cancel chamber 55 is provided in the primary pulley 10. In this case, the centrifugal hydraulic pressure cancel chamber 55 is capable of canceling centrifugal hydraulic pressures of the primary clamp chamber 20 and the primary pulley cylinder chamber 30 effectively.

This application is based on a prior Japanese Patent Application No. 2003-196240 filed on July 14, 2003. The entire contents of this Japanese Patent Application No. 2003-196240 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

**Claims**

1. A belt continuously-variable transmission comprising:

   a pulley including a first disk, and a movable disk arranged to form a pulley groove between the first disk and the movable disk;
   a piston arranged to directly push the movable disk to vary a width of the pulley groove;
   a fixed wall located adjacent to a piston chamber exerting a hydraulic pressure to move the movable disk, and arranged to form a centrifugal hydraulic pressure cancel chamber between the piston and the fixed wall; and
   a support shaft supporting the pulley, and including a supply passage to supply a centrifugal hydraulic pressure cancel fluid to the centrifugal hydraulic pressure cancel chamber, and a connection passage connecting the supply passage with the centrifugal hydraulic pressure cancel chamber liquid-tightly.

2. The belt continuously-variable transmission as claimed in Claim 1, wherein the fixed wall is located between the centrifugal hydraulic pressure cancel chamber and a first piston chamber, and the piston is located between the centrifugal hydraulic pressure cancel chamber and a second piston chamber, so that the centrifugal hydraulic pressure cancel chamber is formed between the first and second piston chambers for applying a thrust to the movable disk.

3. The belt continuously-variable transmission as claimed in Claim 1, wherein the support shaft is formed with an exposure passage extending from the supply passage to an open end opening in the pulley groove between the first disk and the movable disk.

4. A belt continuously-variable transmission comprising:

   a first pulley formed with a first pulley groove receiving a belt;
   a first disk forming a second pulley groove for receiving the belt;
   a second disk defining the pulley groove between the first disk and the second disk;
   a piston arranged to push the second disk to vary a width of the pulley groove;
   a support shaft supporting the second disk, and including a supply passage; and
   a fixed wall defining a centrifugal hydraulic pressure cancel chamber which is formed between the piston and the fixed wall, and which is connected liquid-tightly with the supply passage.

5. The belt continuously-variable transmission as claimed in Claim 4, wherein the support shaft is formed with the supply passage extending axially in an axial direction of the support shaft, and a connection passage connecting the supply passage with the centrifugal hydraulic pressure cancel chamber liquid-tightly.

6. The belt continuously-variable transmission as claimed in Claim 5, wherein the support shaft is formed with an exposure passage extending from the supply passage to an open end opening in the bottom of the second pulley groove between the first and second disks.

7. The belt continuously-variable transmission as claimed in Claim 5, wherein the fixed wall is mounted on the support shaft axially between the second disk and the piston, and arranged to separate the centrifugal hydraulic pressure cancel chamber, and a cylinder fluid chamber formed axially between the second disk and the fixed wall.

8. The belt continuously-variable transmission as claimed in Claim 7, wherein the belt continuously-variable transmission further comprises an end wall defining a clamp fluid chamber between the piston and the end wall, and the piston is mounted on the support shaft axially between the fixed wall and the end wall.

9. The belt continuously-variable transmission as claimed in Claim 5, wherein the fixed wall includes an inner portion fixedly mounted on the support shaft by fitting over the support shaft, and the inner portion of the fixed wall is formed with a radial passage connecting the connection passage of the support shaft with the centrifugal hydraulic pressure cancel chamber.

**10.** The belt continuously-variable transmission as claimed in Claim 9, wherein the second disk includes a radial outer portion having an axial extension, the fixed wall includes a radial outer end fit in the axial extension of the second disk, and the piston includes a radial outer portion abutting on an end of the axial extension of the second disk.

**11.** The belt continuously-variable transmission as claimed in Claim 5, wherein the first disk is a fixed disk stationary relative to the support shaft, and the second disk is a movable disk movable axially in the axial direction of the support shaft; and wherein the belt continuously-variable transmission further includes a spring member disposed between the second disk and the fixed wall.

**12.** The belt continuously-variable transmission as claimed in Claim 8, wherein each of the clamp fluid chamber and the cylinder fluid chamber exerts a centrifugal hydraulic pressure acting in a first axial direction to decrease the width of the pulley groove, and the centrifugal hydraulic pressure cancel chamber exerts a centrifugal hydraulic pressure acting in a second axial direction to increase the width of the pulley groove.

**13.** The belt continuously-variable transmission as claimed in Claim 10, wherein the piston includes an inner portion having an inner end abutting on the inner portion of the fixed wall; and wherein the inner portion of the fixed wall and the inner portion of the piston are arranged to define an inner chamber part of the centrifugal hydraulic pressure cancel chamber; and the axial extension of the second disk, the radial outer end of the fixed wall and the radial outer portion of the piston are arranged to define an outer chamber part of the centrifugal hydraulic pressure cancel chamber.

EP 1 498 639 A1

# FIG.1

# FIG.2

# FIG.3

# FIG.4

EP 1 498 639 A1

# FIG.5

**European Patent Office**

**EUROPEAN SEARCH REPORT**

Application Number

EP 04 01 4751

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 483 764 A (HONDA MOTOR CO LTD) 6 May 1992 (1992-05-06) * column 9, line 46 - line 58 * * figure 1 * | 1,3-7, 10-13 | F16H9/18 F16H55/56 F16H61/00 |
| A |  | 2,8,9 |  |
| X | EP 1 156 235 A (TOYOTA MOTOR CO LTD) 21 November 2001 (2001-11-21) * paragraphs [0007], [0041], [0048], [0053] * * figures 1,8 * | 1-8, 10-13 |  |
| X | DE 100 37 136 A (LUK LAMELLEN & KUPPLUNGSBAU) 8 March 2001 (2001-03-08) * figure 2 * | 1-8, 10-13 |  |
| X | DE 199 20 063 C (DAIMLER CHRYSLER AG) 18 January 2001 (2001-01-18) * column 5, line 9 - line 16 * * figures 1-4 * | 1-8,11, 13 |  |
|  |  |  | TECHNICAL FIELDS SEARCHED (Int.Cl.7) |
|  |  |  | F16H |

The present search report has been drawn up for all claims

| Place of search | Date of completion of the search | Examiner |
|---|---|---|
| Munich | 8 October 2004 | Hassiotis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 01 4751

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2004

| Patent document cited in search report | | Publication date | Patent family member(s) | | Publication date |
|---|---|---|---|---|---|
| EP 0483764 | A | 06-05-1992 | JP | 2687041 B2 | 08-12-1997 |
| | | | JP | 4165149 A | 10-06-1992 |
| | | | CA | 2054362 A1 | 30-04-1992 |
| | | | DE | 69120498 D1 | 01-08-1996 |
| | | | DE | 69120498 T2 | 31-10-1996 |
| | | | EP | 0483764 A1 | 06-05-1992 |
| | | | US | 5176579 A | 05-01-1993 |
| EP 1156235 | A | 21-11-2001 | JP | 2001323978 A | 22-11-2001 |
| | | | EP | 1156235 A2 | 21-11-2001 |
| | | | US | 2001044350 A1 | 22-11-2001 |
| DE 10037136 | A | 08-03-2001 | DE | 10037136 A1 | 08-03-2001 |
| | | | JP | 2001082563 A | 27-03-2001 |
| DE 19920063 | C | 18-01-2001 | DE | 19920063 C1 | 18-01-2001 |

EPO FORM P0459